# EUROPEAN PATENT APPLICATION

(11) **EP 4 848 533 A1**
(43) Date of publication of application: **02.12.2026**
(21) Application number: 26172651.7
(22) Date of filing: 16.04.2026
(51) Int. Cl.: H02J 9/06, H02J 3/0073, H02H 9/00

(54) **RAPID A9 TRANSFER THROUGH CURRENT LIMITING WITH OPTIMAL VARIABLE INRUSH CURRENT CONTROL**

(30) Priority: 29.05.2025 US 202519221739
(71) Applicant: ABB Schweiz AG, 5400 Baden (CH)
(72) Inventor: CHAVAN, Govind, Garner 27529 (US); DONG, Zhou, Cary 27519 (US); SURYANARAYANA, Harish, Apex 27523 (US); ZHAO, Shuyan, Raleigh 27606 (US)
(74) Representative: Maiwald GmbH

(57) **Abstract**

Systems and methods for transferring a load between power sources may include monitoring voltage waveforms of the power sources connectable to the load by a static transfer switch, in response to detecting a power quality event affecting a first power source, switching the first switch device off to disconnect the load from the first power source, calculating a phase angle difference between the power sources based on the monitored voltage waveforms, selectively switching the second switch device on and off to connect the load to a second power source based on the phase angle being in a first range or a second range. A controller can be used to selectively switch the second switch device in accordance with a first current limit or second current limit based on the phase angle being in the first or second ranges, respectively, to reduce a transfer time for transferring the load.

## Description

### FIELD

This disclosure relates to the field of switching devices. More particularly, this disclosure relates to a switching device that provides rapid transfer through current limiting with optimal variable inrush current control.

### BACKGROUND

Electrical power distribution systems typically include a transfer switch device that electrically couples a load to one of a primary power source and a secondary power source. The transfer switch device can include at least one first switching device to connect the load to the primary power source and at least one second switch device to connect the load to the secondary power source. During a nominal condition, the at least one first switching device can be in the closed position to connect the load to the first power source. When a fault is detected at the first power source, the load can be transferred to the second power source using the at least one second switching device to provide electrical fault protection to the load devices.

### SUMMARY

In some embodiments, a method for implementing current limiting with variable inrush current control can include monitoring, with a controller associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch, in response to detecting a power quality event affecting the first power source, switching, with the controller, the first solid-state switch device off to disconnect the load from the first power source, calculating, with the controller, a value characterizing a phase angle difference between the first power source and the second power source based on the monitored voltage waveforms, and selectively switching, with the controller, the second solid-state switch device on and off to connect the load to the second power source in accordance with the calculated value being in one of a first range and a second range, the controller selectively switches the second solid-state switch device on and off in accordance with a first current limit based on the calculated value being in the first range and a second current limit based on the calculated value being in the second range to reduce a transfer time for transferring the load from the first power source to the second power source.

In some embodiments, the first current limit can include a first upper current limit being a value characterizing a nominal inrush current limit of the second solid-state switch device. In some embodiments, the second current limit can include at least one second upper current limit being at least one value characterizing at least one inrush current limit between the nominal inrush current limit and a maximum allowed inrush current of the second solid-state switch device based on the calculated value characterizing the phase angle difference between the first power source and the second power source.

In some embodiments, the maximum allowed inrush current of the second solid-state switch device can be based on a thermal limit of the second solid-state switch device.

In some embodiments, in response to the calculated value being in the second range, the method can further include determining, with the controller, a second upper current limit of the at least one second upper current limit predicted to result in a lowest transfer time for transferring the load from the first power source to the second power source with the second solid-state switch device based on the calculated value, and selectively switching, with the controller, the second solid-state switch device on and off to transfer the load from the first power source to the second power source in accordance with the second upper current limit, the second upper current limit being a respective value of the at least one value characterizing an inrush current limit of the at least one inrush current limit between the nominal inrush current limit and the maximum allowed inrush current of the second solid-state switch device.

In some embodiments, determining the second upper current limit of the at least one second upper current limit predicted to result in the lowest transfer time for transferring the load from the first power source to the second power source with the second solid-state switch device can include identifying, with the controller, the lowest transfer time of the second solid-state switch device from a dataset, the dataset including a plurality of values characterizing the phase angle difference between the first power source and the second power source and a plurality of transfer times, each value of the plurality of values corresponding to a transfer time of the plurality of transfer times for transferring the load from the first power source to the second power source using the second solid-state switch device.

In some embodiments, determining the second upper current limit of the at least one second upper current limit predicted to result in the lowest transfer time for transferring the load from the first power source to the second power source with the second solid-state switch device can include predicting, with the controller, the lowest transfer time of the second solid-state switch device based on calculated value characterizing the phase angle difference between the first power source and the second power source.

In some embodiments, selectively switching the second solid-state switch device on and off to transfer the load from the first power source to the second power source in accordance with the second upper current limit can further include monitoring, with the controller, electric current at the second solid-state switch device, switching, with the controller, the second solid-state switch device off in response to the monitored electric current approaching the second upper current limit, and switching, with the controller, the second solid-state switch device on in response to the monitored electric current approaching a second lower current limit.

In some embodiments, the phase angle difference in the second range can include the first power source lagging or leading the second power source by 30° ± 10°.

In some embodiments, the phase angle difference in the first range can include the first power source lagging or leading the second power source outside the second range.

In some embodiments, the method can further include detecting an end to the power quality event affecting the first power source, switching, with the controller, the second solid-state switch device off to disconnect the load from the second power source, calculating, with the controller, a second value characterizing a phase angle difference between the first power source and the second power source based on the monitored voltage waveforms, and selectively switching, with the controller, the first solid-state switch device on and off to connect the load to the first power source from the second power source in accordance with the calculated value being in one of the first range and the second range. In some embodiments, the controller selectively switches the first solid-state switch device on and off in accordance with a first current limit of the first solid-state switch device based on the calculated value being in the first range and a second current limit of the first solid-state switch device based on the calculated value being in the second range to reduce a transfer time for transferring the load from the second power source to the first power source.

In some embodiments, a system can include a static transfer switch. In some embodiments, each phase of the static transfer switch can include a first solid-state switch device selectively operable to connect a load to a first power source, and a second solid-state switch device selectively operable to connect the load to a second power source. In some embodiments, the system can include a controller associated with the static transfer switch. In some embodiments, the controller can be configured to perform operations including monitor a first voltage waveform of the first power source and a second voltage waveform of the second power source, in response to detecting a power quality event affecting the first power source, switch the first solid-state switch device off to disconnect the load from the first power source, calculate a value characterizing a phase angle difference between the first power source and the second power source based on the monitored voltage waveforms, and selectively switch the second solid-state switch device on and off to connect the load to the second power source in accordance with the calculated value being in one of a first range and a second range. In some embodiments, the controller selectively switches the second solid-state switch device on and off in accordance with a first current limit based on the calculated value being in the first range and a second current limit based on the calculated value being in the second range to reduce a transfer time for transferring the load from the first power source to the second power source.

In some embodiments, the first current limit can include a first upper current limit being a value characterizing a nominal inrush current limit of the second solid-state switch device. In some embodiments, the second current limit can include at least one second upper current limit being at least one value characterizing at least one inrush current limit between the nominal inrush current limit and a maximum allowed inrush current of the second solid-state switch device based on the calculated value characterizing the phase angle difference between the first power source and the second power source, the maximum allowed inrush current of the second solid-state switch device is based on a thermal limit of the second solid-state switch device.

In some embodiments, in response to the calculated value being in the second range, the operations can further include determine a second upper current limit of the at least one second upper current limit predicted to result in a lowest transfer time for transferring the load from the first power source to the second power source with the second solid-state switch device based on the calculated value, and selectively switch the second solid-state switch device on and off to transfer the load from the first power source to the second power source in accordance with the second upper current limit. In some embodiments, the second upper current limit can be a respective value of the at least one value characterizing an inrush current limit of the at least one inrush current limit between the nominal inrush current limit and the maximum allowed inrush current of the second solid-state switch device.

In some embodiments, determining the second upper current limit of the at least one second upper current limit predicted to result in the lowest transfer time for transferring the load from the first power source to the second power source with the second solid-state switch device can include identify the lowest transfer time of the second solid-state switch device from a dataset. In some embodiments, the dataset can include a plurality of values characterizing the phase angle difference between the first power source and the second power source and a plurality of transfer times. In some embodiments, each value of the plurality of values can correspond to a transfer time of the plurality of transfer times for transferring the load from the first power source to the second power source using the second solid-state switch device.

In some embodiments, in the first range, the first power source lags or leads the second power source by 30° ± 10°. In some embodiments, the phase angle difference in the first range can include the first power source lagging or leading the second power source outside the second range.

In some embodiments, a control circuit associated with a static transfer switch for transferring electrical connection of a load between a first power source and a second power source of an AC distribution system using at least one algorithm, the control circuit can be configured to perform operations including monitor a first voltage waveform of the first power source and a second voltage waveform of the second power source, in response to detecting a power quality event affecting the first power source, switch a first solid-state switch device off to disconnect the load from the first power source, calculate a value characterizing a phase angle difference between the first power source and the second power source based on the monitored voltage waveforms, and selectively switch the second solid-state switch device on and off to connect the load to the second power source in accordance with the calculated value being in one of a first range and a second range. In some embodiments, the controller can selectively switch the second solid-state switch device on and off in accordance with a first current limit based on the calculated value being in the first range and a second current limit based on the calculated value being in the second range to reduce a transfer time for transferring the load from the first power source to the second power source.

In some embodiments, the first current limit can include a first upper current limit being a value characterizing a nominal inrush current limit of the second solid-state switch device. In some embodiments, the at least one second current limit can include at least one second upper current limit being at least one value characterizing at least one inrush current limit between the nominal inrush current limit and a maximum allowed inrush current of the second solid-state switch device based on the calculated value characterizing the phase angle difference between the first power source and the second power source. In some embodiments, the maximum allowed inrush current of the second solid-state switch device can be based on a thermal limit of the second solid-state switch device.

In some embodiments, in response to the calculated value being in the second range, the operations can further include determine a second upper current limit of the at least one second upper current limit predicted to result in a lowest transfer time for transferring the load from the first power source to the second power source with the second solid-state switch device based on the calculated value, and selectively switch the second solid-state switch device on and off to transfer the load from the first power source to the second power source in accordance with the second upper current limit. In some embodiments, the second upper current limit can be a respective value of the at least one value characterizing an inrush current limit of the at least one inrush current limit between the nominal inrush current limit and a maximum allowed inrush current of the second solid-state switch device.

In some embodiments, determining the second upper current limit of the at least one second upper current limit predicted to result in the lowest transfer time for transferring the load from the first power source to the second power source with the second solid-state switch device can include identify the lowest transfer time of the second solid-state switch device from a dataset. In some embodiments, the dataset can include a plurality of values characterizing the phase angle difference between the first power source and the second power source and a plurality of transfer times. In some embodiments, each value of the plurality of values can correspond to a transfer time of the plurality of transfer times for transferring the load from the first power source to the second power source using the second solid-state switch device.

In some embodiments, in the first range, the first power source can lag or lead the second power source by 30° ± 10°. In some embodiments, the phase angle difference in the first range can include the first power source lagging or leading the second power source outside the second range.

### BRIEF DESCRIPTION OF THE DRAWINGS

Some embodiments of the disclosure are herein described, by way of example only, with reference to the accompanying drawings. With specific reference now to the drawings in detail, it is stressed that the embodiments shown are by way of example and for purposes of illustrative discussion of embodiments of the disclosure. In this regard, the description taken with the drawings makes apparent to those skilled in the art how embodiments of the disclosure may be practiced.
FIG. 1 is a schematic diagram of a system, according to some embodiments.
FIG. 2 is a schematic diagram of the system, according to some embodiments.
FIG. 3 is a block diagram of a system, according to some embodiments.
FIG. 4 is a flow diagram of a method for transferring power sources in accordance with a current limiting algorithm, according to some embodiments.
FIG. 5 is a flow diagram of a method for transferring power sources in accordance with a current limiting algorithm, according to some embodiments.
FIG. 6 is a flow diagram of a method for transferring power sources in accordance with a current limiting algorithm, according to some embodiments.
FIG. 7 is a flow diagram of a method for transferring power sources, according to some embodiments.
FIG. 8 is a graphical illustration of a current-time chart during a transfer operation in a system, according to some embodiments.
FIG. 9 is a graphical illustration of a transfer time-phase difference chart in a system, according to some embodiments.
FIG. 10 is a graphical illustration of a first clement time-RMS voltage chart in a system, according to some embodiments.
FIG. 11 is a graphical illustration of a second clement time-RMS voltage chart in the system of FIG. 10, according to some embodiments.
FIG. 12 is a graphical illustration of a first transfer time-phase difference chart in the system of FIG. 10, according to some embodiments.
FIG. 13 is a graphical illustration of a second transfer time-phase difference chart in the system of FIG. 10, according to some embodiments.

### DETAILED DESCRIPTION

The various embodiments described herein relate to systems and methods for rapid transfer of a load's connection between power sources using a static transfer switch through current limiting with improved variable inrush current control. The rapid transfer can be implemented using the static transfer switch to instantly disconnect a power source that is connected to a load responsive to detecting an electrical fault at the power source, and to immediately transfer the load to another power source in accordance with a variable inrush current limit, which can be based on a phase angle difference between the power sources. The phase angle difference between the power sources can be determined in some embodiments by monitoring a voltage waveform of each of the respective power sources using one or more sensor devices and calculating a value characterizing the phase angle difference between the power sources. The variable inrush current limit of the static transfer switch can, in some embodiments, include different upper limits based on the phase angle differences between the power sources, as will be further described herein. Transferring the load from one power source to another power source with the static transfer switch in accordance with the variable inrush current limit can in some embodiments reduce the time for transferring the load from the one power source to the other power source, which thereby reduces the time that the load is disconnected to one of the power sources.

The static transfer switch can include at least one first solid-state switch device positioned on a first branch between the load and a first power source (i.e., primary power source) and at least one second solid-state switch device positioned on a second branch between the load and a second power source (i.e., secondary power source). Each of the at least one first solid-state switch device and the at least one second solid-state switch device can be switched closed to connect the load to the respective power source and can be switched open to disconnect the load from the respective power source. For example, the at least one first solid-state switch device can be switched open responsive to detection of a fault event at the first power source.

The static transfer switch can include solid-state switch devices, which are utilized due to their high frequency switching, low conduction losses, and fast switching speeds compared to traditional thyristors. For example, the static transfer switch can include silicon carbide (SiC) based solid-state switch devices such as, for example, SiC metal-oxide-semiconductor field-effect transistors (SiC MOSFETs) to connect the load to one of the power sources. The type of solid-state switch devices used for the static transfer switch can be selected based on the switches being capable of fast frequency switching performance sufficient to meet the demands of the improved variable inrush current limiting control provided using the current limiting algorithm described herein.

When an electrical fault occurs at the power source that is connected to the load, the solid-state switch devices of the static transfer switch can be switched open to disconnect the load from the faulty power source and the other solid-state switch devices of the static transfer switch can be selectively operated to transfer the load to the other power source. While thyristors demonstrate low conduction loss and the capability to withstand high inrush current, the current limiting algorithm can leverage the high frequency switching capabilities and fast switching speeds of the solid-state switch devices to selectively switch the solid-state switch devices open and closed to limit an inrush current at the solid-state switch devices while transferring the load to the working power source and to reduce the transfer time. The interruption of the fault current from the faulty power source may, in some embodiments, be initiated at the static transfer switch at the instance the fault condition is detected. The transferring of the load and connection to the other power source may, in some embodiments, be initiated at the static transfer switch at a same instance the static transfer switch disconnects the load from the faulty power source. It is to be appreciated that the solid-state switch devices are not intended to be limited to SiC-based solid-state switch devices but can include other types of solid-state switch devices that are capable of high frequency switching, low conduction losses, and fast switching speeds in accordance with the current limiting algorithm of the present disclosure.

The rapid transfer of the load's connection between the power sources using the static transfer switch can be implemented using a control circuit. The control circuit can include a current limiting algorithm configured to, in some embodiments, immediately connect the load to the power source that is not experiencing the electrical fault using the corresponding solid-state switch device of the static transfer switch. The static transfer switch immediately connects the load to the working power source with the understanding that there may be some inrush current caused by the phase angle difference between the power sources. That is, at a load transformer coupled between the static transfer switch and the load, there can be a residual flux inside the load transformer from the faulty power source when the corresponding solid-state switch device is switched open. When the load is transferred to the working power source by the static transfer switch being switched closed, the voltage imposed on the load transformer from the second power source will not match the residual flux. Since the transformer is designed to handle only a peak nominal value of flux, the transformer will enter saturation and causes the magnetizing inductance to drop and results in inrush current at the transformer and the static transfer switch.

To limit the inrush current at the static transfer switch, the control circuit can, in some embodiments, selectively switch the solid-state switch device open and closed in accordance with a current limiting algorithm to maintain the current within a current limit range and to maintain a peak value of the current below a nominal inrush current limit. The control circuit can, in some embodiments, optimally change the current limit range of the current limiting algorithm as a function of the phase angle difference. The control circuit can, in some embodiments, implement a first current limit range for the static transfer switch when the phase angle difference between the power sources is in a first range and can implement a second current limit range for the static transfer switch when the phase angle difference between the power sources is in a second range. The first current limit range can, in some embodiments, include a first upper limit based on a nominal inrush current limit (i.e., rated nominal current) of the solid-state switch devices. For example, the peak current of the solid-state switch devices can be limited to the first upper limit when the phase angle difference is in the first range. The second current limit range can, in some embodiments, include a second upper limit based on a maximum inrush current threshold of the solid-state switch devices. The maximum inrush current threshold can, in some embodiments, be based on a thermal limit of the solid-state switch devices of the static transfer switch. The maximum inrush current threshold can, in some embodiments, be defined by a user to reduce the transfer time while being limited to the thermal limit of the static transfer switch. For example, for phase angle differences (α) such as, for example, 30°≤ α ≤330°, the current limit range of the static transfer switch can be altered so as to be limited to 1.2 times the rated nominal inrush current limit of the solid-state switch device, which can reduce the transfer time for the static transfer switch to connect the load to the working power source (i.e., not experiencing the fault) relative the rated nominal inrush current limit. In some embodiments, for phase angle differences (α) near 0°, the current limit range of the static transfer switch can be altered so as to be limited to a greater value (e.g., greater than 1.2 times) than the rated nominal inrush current limit of the solid-state switch device, which can further reduce the transfer time for the static transfer switch to connect the load to the working power source. For example, the current limit range of the static transfer switch can be 1.5 times the nominal inrush current limit when the phase angle difference is at 10°. In another example, the current limit range of the static transfer switch can be 1.8 times the nominal inrush current limit when the phase angle difference is at 5°. In some embodiments, the control circuit can optimally change the current limiting band of the current limiting algorithm as a function of the voltage angle difference.

The time period between disconnecting the load from the faulty power source by the static transfer switch and the connecting the load to the working power source by the static transfer switch can be a critical design feature in certain applications. For example, electrical distribution system can be designed to include energy storage device(s) such as, for example, capacitors located at a load-side of the transformer can store electrical energy that can then be supplied to the load responsive to the load being disconnected from the faulty power source and during the transfer process of connect the load to the working power source. The higher transfer times of conventional control strategies can thereby increase the energy storage requirements of the energy storage device(s), which can require using energy storage device(s) in the system that have comparatively larger dimensions and increased costs.

The embodiments of this disclosure can reduce the transfer times of conventional control strategies. One example of a conventional control strategy is commonly referred to as a direct inrush restraint (DIR) algorithm, which connects the load to the working, non-faulty power source using the static transfer switch at the moment when the prospective magnetic flux at the load transformer from the working power source matches the residual flux in the load transformer from the moment the static transfer switch disconnected the load transformer (and the load) from the faulty power source. However, the flux matching approach of the DIR algorithm can demonstrate higher transfer times since the static transfer switch waits until the moment the prospective flux in the load transformer matches the residual flux prior to connecting the load to the working power source using the static transfer switch. The current limiting algorithm of the present disclosure can, in some embodiments, precisely control the current limiting band by altering the upper current limit for certain phase angle differences to reduce the transfer time of the static transfer switch compared to the conventional control strategies including the DIR algorithm.

Another example of a conventional control strategy is commonly referred to as A9 transfer, which proposes altering the current limit of the static transfer switch from a first peak current limit to a higher second peak current limit based on the phase angle difference α between the power sources being near 0°. The control strategy of the present disclosure improves upon the A9 transfer by precisely controlling the peak inrush current limit of the static transfer switch by implementing a variable upper current limit based on the phase angle difference between the power sources. That is, responsive to the phase angle difference between the power sources being at or near 0°, the current limiting algorithm can alter the upper current limit of the static transfer switch to an optimal inrush current limit in accordance with the varying phase angle difference α, which can, in some embodiments, further reduce the transfer time of the static transfer switch compared to A9 transfers for the same phase angle difference.

Among those benefits and improvements that have been disclosed, other objects and advantages of this disclosure will become apparent from the following description taken in conjunction with the accompanying figures. Detailed embodiments of the present disclosure are disclosed herein; however, it is to be understood that the disclosed embodiments are merely illustrative of the disclosure that may be embodied in various forms. In addition, each of the examples given regarding the various embodiments of the disclosure which are intended to be illustrative, and not restrictive.

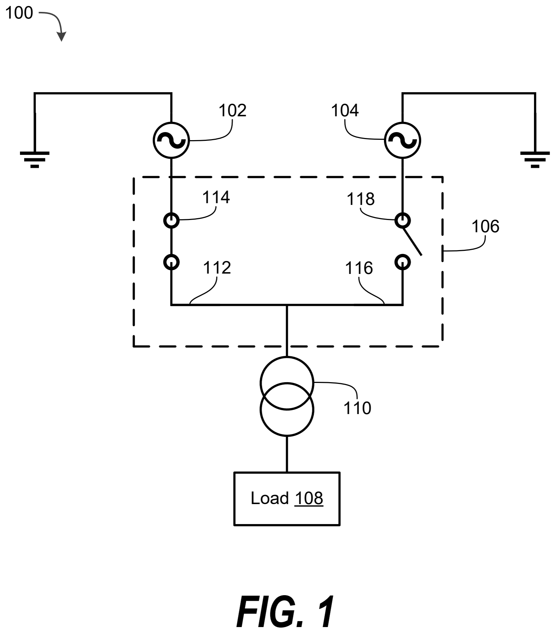

FIG. 1 is a schematic diagram of a system 100, according to some embodiments. The system 100 can be an alternating current (AC) electrical system. The system 100 can include a first power source 102, a second power source 104, a static transfer switch 106, and a load 108. The first power source 102 can in some embodiments be a preferred power source. For example, the first power source 102 can include a utility grid. The second power source 104 can in some embodiments be a secondary power source. For example, the second power source 104 can include at least one of a generator, batteries, solar power, combinations thereof, or some other like power source(s). The load 108 can include one or more devices that depends on continuous delivery of power from one of the first power source 102 and second power source 104. For example, the load 108 can include devices associated with a data center. In some embodiments, the system 100 can further include a load transformer 110. The load transformer 110 can be located between the static transfer switch 106 and the load 108.

The static transfer switch 106 can include a first branch 112 including a first solid-state switch device 114 and a second branch 116 including a second solid-state switch device 118. The first branch 112 can be coupled to the first power source 102 and the load 108. The second branch 116 can be coupled to the second power source 104 and the load 108. At the first branch 112, the first solid-state switch device 114 can be switched closed to connect the first power source 102 to the load 108 and the first solid-state switch device 114 can be switched open to disconnect the first power source 102 from the load 108 in accordance with a fault current limiting algorithm of the present disclosure. In addition, at the second branch 116, the second solid-state switch device 118 can be switched closed to connect the second power source 104 to the load 108 and the second solid-state switch device 118 can be switched open to connect the second power source 104 to the load 108 in accordance with the fault current limiting algorithm of the present disclosure.

First solid-state switch device 114 and second solid-state switch device 118 of static transfer switch 106 can have a fast switching frequency to transfer load 108 between first power source 102 and second power source 104 in accordance with the current limiting algorithm, as will be further described herein. First solid-state switch device 114 and second solid-state switch device 118 of static transfer switch 106 can, in some embodiments, be SiC MOSFETs. In other embodiments, first solid-state switch device 114 and second solid-state switch device 118 of static transfer switch 106 can be other types of switch devices capable of fast frequency switching operations in accordance with the current limiting algorithm described herein. First solid-state switch device 114 and second solid-state switch device 118 of static transfer switch 106 can, in some embodiments, include a SiC metal-oxide-semiconductor field-effect-transistor (MOSFET), a SiC integrated-gate bipolar transistor (IGBT), an integrated gate-commutated thyristor (IGCT), other similar switch devices capable of high frequency switching, or any combination thereof. First solid-state switch device 114 and second solid-state switch device 118 of static transfer switch 106 can, in some embodiments, be SiC MOSFETs. In other embodiments, first solid-state switch device 114 and second solid-state switch device 118 of static transfer switch 106 can be other types of switch devices capable of fast frequency switching operations in accordance with the FCL algorithm described herein. For example, in some embodiments, the first solid-state switch device 114 can be a thyristor-based switch and the second solid-state switch device 118 can be a SiC MOSFET.

In one example, during a nominal condition, the first solid-state switch device 114 can be switched into the closed position such that the static transfer switch 106 connects the load 108 to the first power source 102. Responsive to detecting an electrical fault at the first power source 102, the first solid-state switch device 114 can be switched open such that the static transfer switch 106 disconnects the load 108 from the first power source 102 and the second solid-state switch device 118 can be immediately switched closed such that the static transfer switch 106 begins transferring the load to the second power source 104 in accordance with the current limiting algorithm of the present disclosure.

The static transfer switch 106 can include one or more solid-state switch devices. Although the static transfer switch 106 of FIG. 1 shows one solid-state switch device located on each branch, it is to be appreciated that the static transfer switch 106 can, in some embodiments, include one or more solid-state switch devices located on each branch that can be switched open and closed to connect or disconnect the load 108 to the corresponding first power source 102 and second power source 104 based on the condition of the system 100.

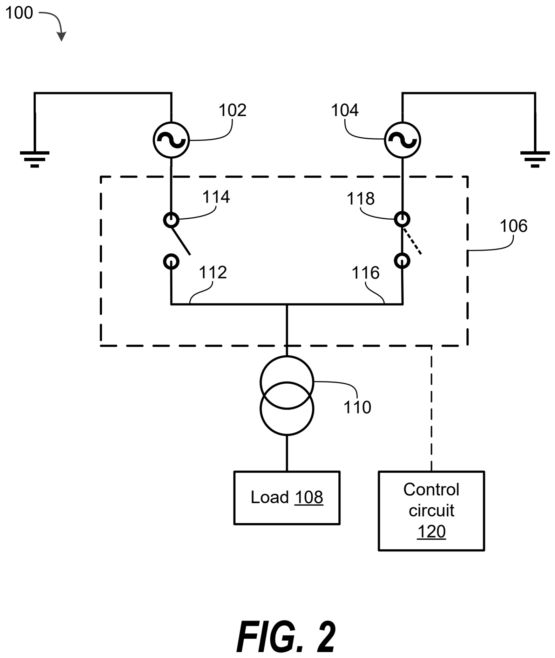

FIG. 2 is a schematic diagram of the system 100, according to some embodiments. The system 100 of FIG. 2 illustrates the process of transferring the load 108 from the first power source 102 to the second power source 104 in accordance with embodiments of this disclosure in which the first solid-state switch device 114 is switched open to disconnect the load 108 from the first power source 102 and the second solid-state switch device 118 is selectively switched on and off (open and closed) as indicated by the dashed line to limit inrush current during the transfer process to the second power source 104.

The system 100 can, in some embodiments, include a control circuit 120. The control circuit 120 can be coupled to one or more components of the system 100. The control circuit 120 can, in some embodiments, be coupled to the static transfer switch 106, and the control circuit 120 can operate the static transfer switch 106. The control circuit 120 can, in some embodiments, selectively control a position of each of the first solid-state switch device 114 and the second solid-state switch device 118 of the static transfer switch 106 so as to maintain a continuous supply of power to the load 108 from one of the first power source 102 and the second power source 104 responsive to the detected parameters of the first power source 102 and the second power source 104. During a nominal condition, the control circuit 120 can, in some embodiments, connect the load 108 to a preferred one of the first power source 102 and the second power source 104 by driving the corresponding one of the first solid-state switch device 114 and the second solid-state switch device 118 of the static transfer switch 106 to the closed position. Responsive to detecting a fault at the power source that is connected to the load, the control circuit 120 can, in some embodiments, disconnect the load 108 from the faulty power source by driving the corresponding one of the first solid-state switch device 114 and the second solid-state switch device 118 of the static transfer switch 106 to switch to the open position. The control circuit 120 can, in some embodiments, immediately transfer the load 108 from the faulty power source to the working power source (i.e., power source not currently experiencing the electrical fault) by driving the corresponding one of the first solid-state switch device 114 and the second solid-state switch device 118 to selectively switch between the closed and open positions while limiting the peak inrush current at the one of the first solid-state switch device 114 and the second solid-state switch device 118 within a variable current limit range implemented in accordance with a current limiting algorithm of the control circuit 120 and based on the phase angle difference between the first power source 102 and the second power source 104.

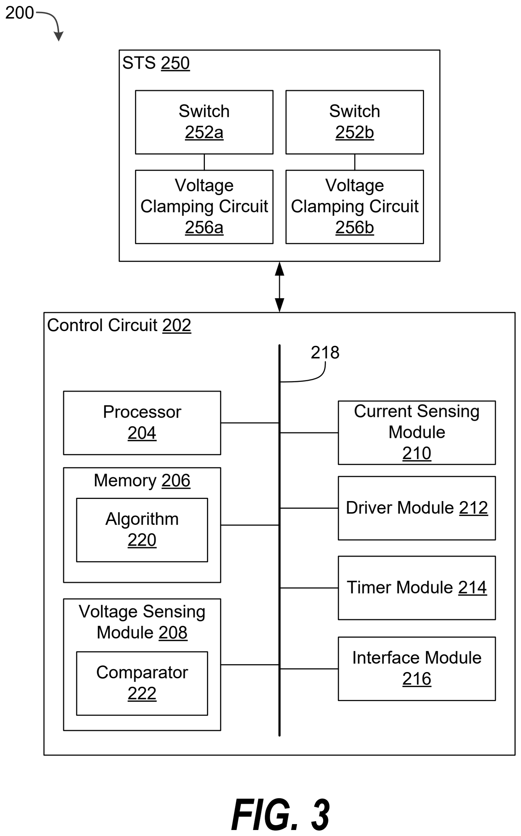

FIG. 3 is a block diagram of a system 200, according to some embodiments. System 200 can be implemented with any combination of components or sub-systems of system 100 of FIG. 1.

System 200 can include a control circuit 202 and a static transfer switch (STS) 250 coupled to control circuit 202. The control circuit 202 can be an embodiment of the control circuit 120 of FIG. 2, according to some embodiments. Control circuit 202 can control one or more components of system 200. Control circuit 202 can be coupled to one or more components including STS 250, and control circuit 202 can control an operation of the electrical components of STS 250, as will be further described herein.

STS 250 can, in some embodiments, correspond to static transfer switch 106 of FIG. 1 or FIG. 2. STS 252 can include multiple switches 252 (shown as switch 252a, 252b). Switch 252a can, in some embodiments, be positioned on a first branch of the STS 250. Switch 252b can, in some embodiments, be positioned on a second branch of the STS 250. Each switch 252 can also include a voltage clamping circuit 256 (shown as voltage clamping circuit 256a, 256b) coupled to the switch 252. For a given switch 252, the corresponding voltage clamping circuit 256 can be configured to fix at least one of a positive or negative peak of a corresponding voltage waveform to a defined voltage. The voltage clamping circuits 256 can be configured to fix the voltage waveform at the corresponding switch device 252 to the defined voltage based on an output signal from the comparator, as will be further described herein. In some embodiments, STS 250 can include a voltage clamping circuit 256a coupled to switch device 252a and a voltage clamping circuit 256b coupled to switch device 252b.

The control circuit 202 can, in some embodiments, include a processor 204, a memory 206, a voltage sensing module 208, a current sensing module 210, a driver module 212, a timer module 214, and an interface module 216. The control circuit 202 can include a bus 218. The one or more modules of the control circuit 202 can be in electrically communicable connection with each other via the bus 218. In some embodiments, the control circuit 202 can be a controller configured to monitor electrical parameters of the system 200 and control one or more components of the system 200 responsive to the measured parameters in accordance with a control logic. For example, the control circuit 202 can operate the static transfer switch 106 (FIG. 1 or FIG. 2) to transfer the load from the first power source 102 (FIG. 1 or FIG. 2) to the second power source 104 (FIG. 1 or FIG. 2) responsive to detecting an abnormal condition at the first power source 102 (FIG. 1 or FIG. 2).

The processor 204 can be configured to execute instructions stored in the memory 206. The memory 206 can in some embodiments include a control logic of the control circuit 202. The memory 206 can in some embodiments include a current limiting algorithm 220. During the transferring of the load by the static transfer switch 106, the current limiting algorithm 220 can be applied to data representative of the monitored electrical parameters of the system 200 to implement a variable current limit, and the control circuit 202 can control the static transfer switch 106 to selectively switch the corresponding one of the first solid-state switch device 114 (FIG. 1 or FIG. 2) and the second solid-state switch device 118 (FIG. 1 or FIG. 2) open and closed in accordance with the current limit to limit the inrush current at the solid-state switch device during the transfer process and to reduce the transfer time. In some embodiments, during the selective switching of a corresponding one of the switch devices 252 of STS 250 used to connect the load to the alternate power source according to the defined current limit, the control circuit 202 can be configured to monitor an energy dissipation at the switch device 252 and the corresponding voltage clamping circuit 256 according to a corresponding thermal limit. The energy dissipation can be monitored by the control circuit 202 using one or more sensors (not shown) coupled to the control circuit 202, according to some embodiments.

In some examples, the current limiting algorithm 220 can implement a first current limit at an upper band based on a phase angle difference between the first power source 102 (FIG. 1 or FIG. 2) and the second power source 104 (FIG. 1 or FIG. 2) being in a first range and can implement a variable second current limit at the upper band based on the phase angle difference between the first power source 102 (FIG. 1 or FIG. 2) and the second power source 104 (FIG. 1 or FIG. 2) being in a second range. In other examples, the current limiting algorithm 220 can implement a first current limit based on a phase angle difference between the first power source 102 (FIG. 1 or FIG. 2) and the second power source 104 (FIG. 1 or FIG. 2) being a first value in the second range and can implement a second current limit based on the phase angle difference between the first power source 102 (FIG. 1 or FIG. 2) and the second power source 104 (FIG. 1 or FIG. 2) being a second value in the second range, each of the first current limit and the second current limit being selected based on the respective phase angle difference values so as to reduce the transfer time of the static transfer switch 106 (FIG. 1 or FIG. 2).

During the transfer process, to connect the load to the alternate power source, control circuit 202 can, in some embodiments, maintain load current at the alternate switch within a defined current limiting range using algorithm 220. In some examples, when connecting a load (not shown) to an alternate power source (not shown) using switch device 252b of STS 250, the control circuit 202 can continue to selectively switch the switch device 252b of STS 250 on and off to maintain load current at switch device 252b within the defined current limiting range until a load transformer flux matches the prospective flux generated by the alternate power source using algorithm 220. The variable current limiting threshold for the switch device 252b can, in some embodiments, be based on a reference current calculated from the alternative power source. The reference current can, in some embodiments, be determined by calculating an optimal trajectory of the current limiting/hysteresis control, which can, in some embodiments, be based on estimation of the flux of the load transformer (not shown) or the phasor of the current.

System 200 can include sensors (not shown) coupled to control circuit 202 to measure electrical parameters at different locations of an AC electrical distribution system such as, for example, at first power source 102, second power source 104, static transfer switch 106, first solid-state switch device 114, second solid-state switch device 118, load 108, load transformer 110, other components, or any combination thereof, of FIG. 1.

The voltage sensing module 208 can be connected to voltage sensors (not shown) to monitor a voltage waveform of the system 200. The voltage sensing module 208 can in some embodiments include voltage sensors to monitor a voltage waveform of the different components. System 200 can, in some embodiments, include sensor devices positioned at a first branch of STS 250 to monitor a voltage waveform of the switch device 252a and at a second branch of STS 250 to monitor a voltage waveform of the switch device 252b from each of the respective power sources. For example, the voltage sensing module 208 can monitor a voltage waveform of the first power source 102 and second power source 104 of FIG. 1 or FIG. 2. The voltage sensing module 208 can, in some embodiments, receive measurement signals representative of the voltage at each of the power sources from the sensors, and the control circuit 202 can calculate a value characterizing a phase angle difference between the power sources based on the measurement signals.

Control circuit 202 can, in some embodiments, include a comparator 222. Comparator 222 can be a circuit or device embodied in control circuit 202 and/or one of its modules and configured to compare parameters of the switch devices 252 to corresponding reference voltages. In some embodiments, the comparator 222 can be configured to compare the at least one parameter of the alternate switch device to a first reference voltage corresponding to the upper limit value and a second reference voltage corresponding to the lower limit value. The alternate switch device can be, in some embodiments, switch device 252a or switch device 252b. In some embodiments, switch device 252a can correspond to first solid-state switch device 114 of FIG. 1 and switch device 252b can correspond to second solid-state switch device 118 of FIG. 1. Control circuit 202 can be configured to determine a turn-on instant and a turn-off instant of the switch devices 252 based on an output from the comparator 222. In some embodiments, control circuit 202 can determine the turn-on instant and a turn-off instant of the switch device 252a based on an output signal from the comparator 222. In other embodiments, control circuit 202 can determine the turn-on instant and a turn-off instant of the switch device 252b based on an output signal from the comparator 222. In some embodiments, voltage sensing module 208 can include the comparator 222.

The current sensing module 210 can be connected to current sensors to monitor a current of the system 200. The current sensing module 210 can, in some embodiments, include current sensors to monitor an electrical current of the static transfer switch 106 (FIG. 1 or FIG. 2). For example, the current sensing module 210 can monitor a current at the first solid-state switch device 114 and the second solid-state switch device 118 of FIG. 1 or FIG. 2. The current sensing module 210 can in some embodiments receive measurement signals representative of the current at the one of the switch 252a and switch 252b of the STS 250 being used during the transfer process, and the control circuit 202 can selectively switch the corresponding one of the switch 252a and switch 252b open and closed to limit the measured current based on the variable current limit.

The driver module 212 can include one or more gate drivers to output gate signals to cause the solid-state switch devices of the static transfer switch 106 (FIG. 1 or FIG. 2) to selectively switch open and closed. The driver module 212 can in some embodiments output a first gate signal to drive a corresponding solid-state switch device of the static transfer switch 106 (FIG. 1 or FIG. 2) to switch closed. The first gate signal can be applied to cause the solid-state switch device to switch closed and to connect the load to the corresponding power source. For example, during the transferring of the load from the first power source 102 (FIG. 1 or FIG. 2) to the second power source 104 (FIG. 1 or FIG. 2), the driver module 212 can output the first gate signal to drive the second solid-state switch device 118 (FIG. 1 or FIG. 2) to switch closed responsive to the current at the second solid-state switch device 118 (FIG. 1 or FIG. 2) exceeding or reaching a lower current limit of the variable current limit. The driver module 212 can, in some embodiments, output a second gate signal to drive the corresponding solid-state switch device of the static transfer switch 106 (FIG. 1 or FIG. 2) to switch open. The second gate signal can be applied to cause the solid-state switch device to switch open and to disconnect the load from the corresponding power source. For example, during the transferring of the load from the first power source 102 (FIG. 1 or FIG. 2) to the second power source 104 (FIG. 1 or FIG. 2), the driver module 212 can output the second gate signal to drive the second solid-state switch device 118 (FIG. 1 or FIG. 2) to switch open responsive to the current at the second solid-state switch device 118 (FIG. 1 or FIG. 2) exceeding or reaching an upper current limit of the variable current limit.

Timer module 214 can measure a time period of the transfer process by static transfer switch 106 (FIG. 1 or FIG. 2) using algorithm 220. The time period can, in some embodiments, span between a first instance and a second instance. The first instance can, in some embodiments, correspond to when the alternative switch of static transfer switch 106 (FIG. 1 or FIG. 2) is turned on. The second instance can, in some embodiments, correspond to a time when load transformer 110 (FIG. 1 or FIG. 2) flux matches with the alternative power source voltage. In this regard, control circuit 202 can define a boundary for the electric current at the alternate switch and control the electric current at the alternate switch through the selective switching of the alternate switch using algorithm 220, such that the load transformer 110 (FIG. 1 or FIG. 2) flux matches the alternate power source voltage.

The timer module 214 can, in some embodiments, calculate a time for transferring the load from the faulty power source to the working power source based on the current limit. The calculated transfer time can in some embodiments be a prediction of the total transfer time to connect the load to the working power source from the faulty power source using the corresponding one or more solid-state switch device of the static transfer switch based on the current limit and the phase angle difference between the power sources. For example, the timer module 214 can calculate the time to transfer the load 108 from the first power source 102 (FIG. 1 or FIG. 2) to the second power source 104 (FIG. 1 or FIG. 2) using the second solid-state switch device 118 (FIG. 1 or FIG. 2) of the static transfer switch 106 (FIG. 1 or FIG. 2).

The control circuit 202 can measure the time to, in some embodiments, mark completion of the transfer using algorithm 220 with a transfer time limit of Ttrans _max. The transfer time limit Ttrans_max can be set according to one or more parameters of the system. For example, the transfer time limit Ttrans_max can be based on a thermal limit (e.g., energy dissipation capacity) of the corresponding voltage clamping circuit 256 and/or the switch devices 252 of the STS 250. In some embodiments, the transfer time limit Ttrans_max can also be further based on a user input. In one example, the transfer time limit Ttrans_max can be set at 20 msec, although other times are possible. In another example, the transfer time limit Ttrans_max can be set at 10 msec. In some embodiments, the control circuit 202 can control the switching of the corresponding switch devices 252 of STS 250 using algorithm 220 during the transfer process until the load transformer flux matches the alternate power source or until the timer reaches the transfer time limit Ttrans_max, which can be indicative of some fault in the system and that the transfer process should be stopped. In some embodiments, the transfer time limit Ttrans_max may be associated with how long of a duration the current limiting functionality can be performed using STS 250 and the switch devices 252 of the STS 250. That is, the current limiting function of these components can dissipate at least some of the heat. Accordingly, in some embodiments, the controller 202 may be configured to set the transfer time limit Ttrans_max based on a predicted lifetime of these components, the number of transfers expected over the predicted lifetime, and/or the percentage of lifetime lost during each transfer.

It should be appreciated that the control circuit 202 can start the timer following the turning on of the alternate switch, or at other time periods during the transfer process. For example, in some embodiments, the timer can be started following the turning off of the primary switch and before the determining whether the load current at the preferred switch Ipri is at or near 0 A (Amps), among other time periods.

The control circuit 202 can be electronic communicable connection with one or more other components of the system 200 through the interface module 216. In some embodiments, the interface module 216 can be connected to the sensors to receive the sensor's measurement signals, and one or more of the functional modules of the control circuit 202 can control the static transfer switch 106 based on the signals. In some embodiments, the interface module 216 can be connected to the static transfer switch 106 to connect the load 108 (FIG. 1 or FIG. 2) to one of the first power source 102 (FIG. 1 or FIG. 2) and the second power source 104 (FIG. 1 or FIG. 2). In some embodiments, the interface module 216 can be connected to the first solid-state switch device 114 (FIG. 1 or FIG. 2) to connect (or disconnect) the load 108 (FIG. 1 or FIG. 2) to the first power source 102 (FIG. 1 or FIG. 2), and the interface module 216 can be connected to the second solid-state switch device 118 to connect (or disconnect) the load 108 (FIG. 1 or FIG. 2) to the second power source 104 (FIG. 1 or FIG. 2). It is to be appreciated that the control circuit 202 can be connected to other components of the system 200 or other devices through the interface module 216. For example, the control circuit 202 can be connected to one or more circuit breakers to serve as backup circuit interrupters between the load and the power sources. For example, the control circuit 202 can be connected to a computing device via the interface module 216 such that a user can input parameters of the static transfer switch 106 including, but not limited to, a nominal inrush current, a maximum allowable inrush current, a look-up table, or any combination thereof.

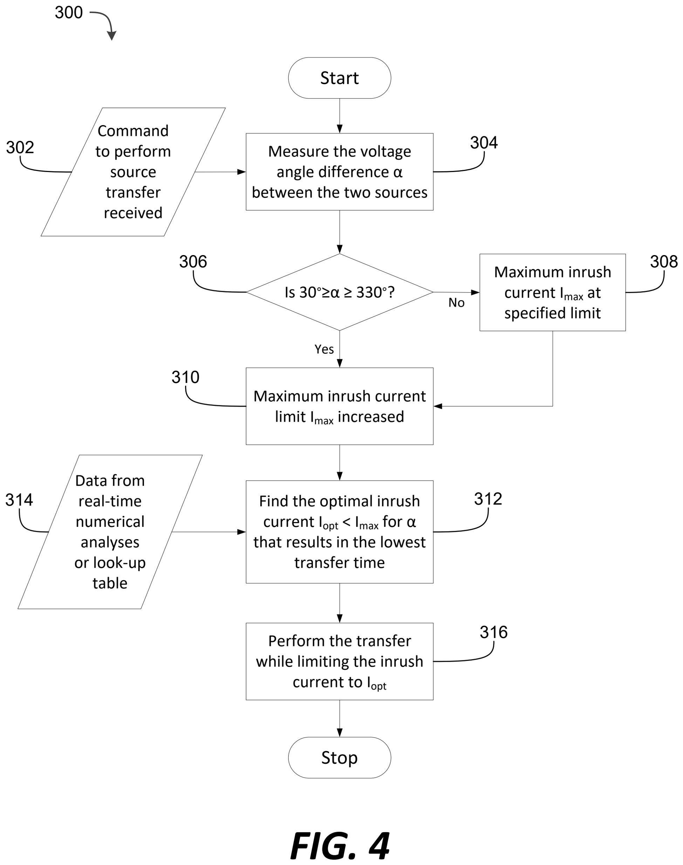

FIG. 4 is a flow diagram of a method 300 for transferring power sources in accordance with a current limiting algorithm, according to some embodiments. The method 300 can in some embodiments be implemented using the system 100 of FIGS. 1 and 2. The method 300 can in some embodiments be implemented using the system 200 of FIG. 3.

At 302, the method 300 can include receiving a command to perform the source transfer. In some embodiments, the command to perform the source transfer can be responsive to detecting an abnormal condition at the power source that is connected to the load. For example, the transfer command can be based on detecting fluctuations at the power source that is connected to the load. In some embodiments, the control circuit 202 of FIG. 3 can provide the command to perform the transfer.

At 304, the method 300 can include measuring a voltage angle difference α between the two power sources. In some embodiments, the method 300 can include calculating a value characterizing the voltage angle difference α between the two power sources. In other embodiments, the method 300 can include measuring a phase angle difference α between the two power sources. In some embodiments, the two power sources can include the first power source 102 and the second power source 104 of FIG. 1.

At 306, the method 300 can include determining whether the voltage angle difference α between the power sources is greater than or equal to 330° and less than or equal to 30° (i.e., 330° ≤ α ≤ 30°). In some embodiments, the method 300 can include determining whether one of the first power source 102 (FIG. 1 or FIG. 2) and second power source 104 (FIG. 1 or FIG. 2) lags or leads the other of the first power source 102 (FIG. 1 or FIG. 2) and the second power source 104 (FIG. 1 or FIG. 2) by 30° ± 10°. Since the current limiting algorithm implements a variable current limit based on the voltage angle difference α that can result in the fastest transfer time by the static transfer switch 106 (FIG. 1 or FIG. 2), it is to be appreciated that the range of voltage angle differences α at which the current limiting algorithm implements a higher current limit relative the nominal inrush current at voltage angle differences α outside this range can vary based on the determined transfer times of the static transfer switch 106 (FIG. 1 or FIG. 2). That is, the current limiting algorithm can impose different current limits onto the static transfer switch 106 (FIG. 1 or FIG. 2) in accordance with the determined voltage angle difference α to reduce the transfer time of the static transfer switch 106 (FIG. 1 or FIG. 2) between the power sources. In some embodiments, the current limiting algorithm can implement the variable current limit for a greater voltage angle difference α range than 330° ≤ α ≤ 30°. For example, the voltage angle difference α range can be 330° ≤ α ≤ 40°. In another example, the voltage angle difference α range can be 320° ≤ α ≤ 40°. In other embodiments, the current limiting algorithm can implement the variable current limit for a smaller voltage angle difference α range. For example, the voltage angle difference α range can be 330° ≤ α ≤ 20°. In another example, the voltage angle difference α range can be 340° ≤ α ≤ 20°. In yet other embodiments, the voltage angle difference α range can include other ranges. For example, the voltage angle difference can be 0° ≤ α ≤ 30°. In another example, the voltage angle difference α can be 0° ≤ α ≤ 40°. The voltage angle difference α range can in some embodiments correspond to an A9 transfer range.

At 308, responsive to the voltage angle difference α being outside the range defined at 306, the method 300 can include maintaining the maximum inrush current Imax at a specified limit. In some embodiments, the maximum inrush current Imax at the specified limit can be a nominal inrush current limit. In some embodiments, the maximum inrush current Imax at the specified limit can be defined by a user of the static transfer switch 106. For example, the user that defines the limits of the static transfer switch 106 can be associated with the load 108.

At 310, responsive to the voltage angle difference α being inside the range defined at 306, the method 300 can include increasing the maximum inrush current limit Imax.

At 312, the method 300 can include determining an optimal inrush current Iopt < Imax for the voltage angle difference α that results in the lowest transfer time. In some embodiments, the optimal inrush current can be a value that is greater than the nominal inrush current limit specified by the customer and less than the increased maximum inrush current limit Imax, which results in the lowest transfer time by the static transfer switch 106 (FIG. 1 or FIG. 2).

At 314, the method 300 can include obtaining the data to determine the optimal inrush current Iopt. In some embodiments, the data can be from real-time numerical analysis of the parameters of the electrical distribution system. For example, the data can be calculated based on the measurement signals received from the sensors. In other embodiments, the data can be from a look-up table stored in memory such as, for example, memory 206 of FIG. 3. The data can in some embodiments include, but is not limited to, voltage angle differences α, optimal inrush currents Iopt, maximum inrush current limit Imax, transfer times, or any combination thereof. For example, the look-up table can include data for voltage angle differences α within the range defined at 306. The voltage angle difference α values in the look-up table can be at a certain interval. For example, the voltage angle difference α values in the look-up table can have an interval of 1. For example, the voltage angle difference α values in the look-up table can have an interval of 0.1. In another example, the voltage angle difference α values in the look-up table can have an interval of 0.01.

At 316, the method 300 can include performing the transfer while limiting the inrush current to the optimal inrush current Iopt determined at 312. The transfer can include selectively switching the corresponding solid-state switch device at the static transfer switch 106 (FIG. 1 or FIG. 2) open and closed to limit a peak current based on the optimal inrush current Iopt. In one example, the first solid-state switch device 114 (FIG. 1 or FIG. 2) can be selectively switched open and closed to limit the peak current based on the optimal inrush current Iopt. For example, the first solid-state switch device 114 (FIG. 1 or FIG. 2) can be selectively switched open and closed to limit the peak current based on the optimal inrush current Iopt to reduce the transfer time for transferring the load 108 (FIG. 1 or FIG. 2) from the second power source 104 (FIG. 1 or FIG. 2) to the first power source 102 (FIG. 1 or FIG. 2). In another example, the second solid-state switch device 118 (FIG. 1 or FIG. 2) can be selectively switched open and closed to limit the peak current based on the optimal inrush current Iopt to reduce the transfer time for transferring the load 108 (FIG. 1 or FIG. 2) from the first power source 102 (FIG. 1 or FIG. 2) to the second power source 104 (FIG. 1 or FIG. 2).

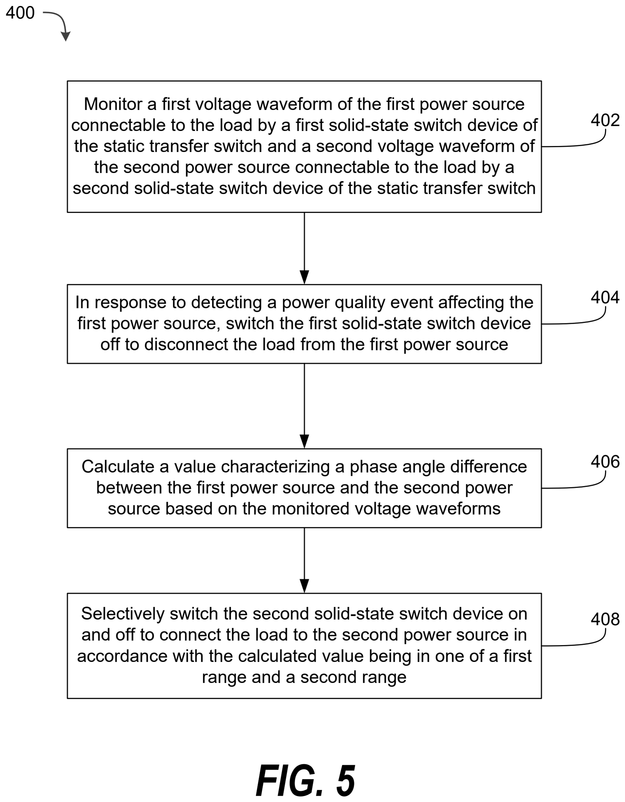

FIG. 5 is a flow diagram of a method 400 for transferring power sources in accordance with a current limiting algorithm, according to some embodiments. The method 400 can be an embodiment of the method 300 of FIG. 4. The method 400 can be implemented using the system 100 of FIGS. 1 and 2. The method 400 can be implemented using the system 200 of FIG. 3. The method 400 assumes that the load 108 (FIG. 1 or FIG. 2) is initially connected to the first power source 102 (FIG. 1 or FIG. 2) via the static transfer switch 106 (FIG. 1 or FIG. 2). It is to be appreciated, however, that this configuration is not intended to be limiting and that the load 108 (FIG. 1 or FIG. 2) can initially be connected to the second power source 104 (FIG. 1 or FIG. 2) via the static transfer switch 106 (FIG. 1 or FIG. 2) and the load 108 (FIG. 1 or FIG. 2) can be transferred to the first power source 102 (FIG. 1 or FIG. 2) using the static transfer switch 106 (FIG. 1 or FIG. 2) according to a method that is similar to method 400.

At 402, the method 400 can include monitoring, with a control circuit associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch.

At 404, the method 400 can include, in response to detecting a power quality event affecting the first power source, switching, with the controller, the first solid-state switch device off to disconnect the load from the first power source. The power quality event can include, but is not limited to, fluctuations, electrical faults, ground faults, arc faults, or other abnormal conditions.

At 406, the method 400 can include calculating, with the controller, a value characterizing a phase angle difference between the first power source and the second power source based on the monitored voltage waveforms.

At 408, the method 400 can include selectively switching, with the controller, the second solid-state switch device on and off to connect the load to the second power source in accordance with the calculated value being in one of a first range and a second range. In some embodiments, the phase angle difference in the second range can include the first power source lagging or leading the second power source by 30° ± 10°. The second range can be, for example, 330° ≤ α ≤ 30°. In some embodiments, the phase angle difference in the first range can include the first power source lagging or leading the second power source outside the second range. The first range can be, for example, 330° > α > 30°. In some embodiments, the controller can selectively switch the second solid-state switch device on and off in accordance with a first current limit based on the calculated value being in the first range and a second current limit based on the calculated value being in the second range to reduce a transfer time for transferring the load from the first power source to the second power source. In some embodiments, the first current limit includes a first upper current limit having a value characterizing a nominal inrush current limit of the second solid-state switch device. In some embodiments, the at least one second current limit includes at least one second upper current limit (i.e., optimal inrush current limit Iopt) having at least one value characterizing at least one inrush current limit between the nominal inrush current limit and a maximum allowed inrush current of the second solid-state switch device based on the calculated value characterizing the phase angle difference between the first power source and the second power source. In some embodiments, the at least one value of the second upper current limit can be further based on a thermal limit of the second solid-state switch device. The controller can, in some embodiments, turn on the second solid-state switch device to begin the transfer process and to selectively switch the second solid-state switch device open and closed when the current at the first solid-state switch device (e.g., preferred switch current Ipri)falls below a low current threshold following the turn-off of the first solid-state switch device to ensure that the load current at the preferred switch device has fallen to a current suitable to connect the alternate switch to limit an inrush current at the static transfer switch. This low current threshold can be at or near 0 A (Amps), in some embodiments. For example, the low current threshold for the primary current can be 0 to 2A.

According to some embodiments, the method 400 can further include, in response to detecting an end to the power quality event affecting the first power source, switching, with the controller, the second solid-state switch device off to disconnect the load from the second power source; calculating, with the controller, a second value characterizing a phase angle difference between the first power source and the second power source based on the monitored voltage waveforms; and selectively switching, with the controller, the first solid-state switch device on and off to connect the load to the first power source from the second power source in accordance with the calculated value being in one of the first range and the second range. In some embodiments, the controller can selectively switch the first solid-state switch device on and off in accordance with a first current limit based on the calculated value being in the first range and a second current limit based on the calculated value being in the second range to reduce a transfer time for transferring the load from the second power source to the first power source.

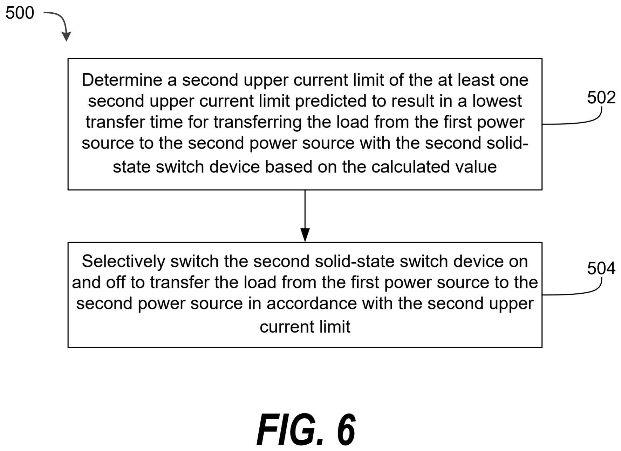

FIG. 6 is a flow diagram of a method 500 for transferring power sources in accordance with a current limiting algorithm, according to some embodiments. The method 500 can be an embodiment of the method 300 of FIG. 4. The method 500 can be an embodiment of 408 of method 400 of FIG. 5. The method 500 can be implemented by the system 100 of FIGS. 1 and 2. The method 500 can be implemented by the system 200 of FIG. 3. The method 500 can be in response to the calculated value of the phase angle difference being in the second range.

At 502, the method 500 can include determining, with the controller, a second upper current limit of the at least one second upper current limit predicted to result in a lowest transfer time for transferring the load from the first power source to the second power source with the second solid-state switch device based on the calculated value.

Determining the second upper current limit can, in some embodiments, include identifying, with the controller, the lowest transfer time of the second solid-state switch device from a dataset, the dataset including a plurality of values characterizing the phase angle difference between the first power source and the second power source and a plurality of transfer times. In some embodiments, each value of the plurality of values in the dataset can correspond to a transfer time of the plurality of transfer times for transferring the load from the first power source to the second power source using the second solid-state switch device. In some embodiments, the dataset can include transfer times associated with each of the second current limits. The dataset can correspond to, for example, a look-up table, in which the second current limit (i.e., optimal inrush current limit Iopt) can be determined for the given phase angle difference α between the power sources.

Determining the second upper current limit can in some embodiments include predicting, with the controller, the lowest transfer time of the second solid-state switch device based on calculated value characterizing the phase angle difference between the first power source and the second power source. That is, instead of obtaining the second current limit from a look-up table, the controller can determine the second current limit (i.e., optimal inrush current limit Iopt) that can result in the lowest transfer time for transferring power sources using the static transfer switch based on the parameters of the system including the phase angle difference α and the electric current measured at the solid-state switch device of the static transfer switch. In some embodiments, the controller can also store the data associated with the transferring of power sources to the memory to then generate a look-up table for future operations or to update the look-up table based on changing performance characteristics.

At 504, the method 500 can include selectively switching, with the controller, the second solid-state switch device on and off to transfer the load from the first power source to the second power source in accordance with the second upper current limit. In some embodiments, the second upper current limit can be a respective value of the at least one value characterizing an inrush current limit of the at least one inrush current limit between the nominal inrush current limit and a maximum allowed inrush current of the second solid-state switch device.

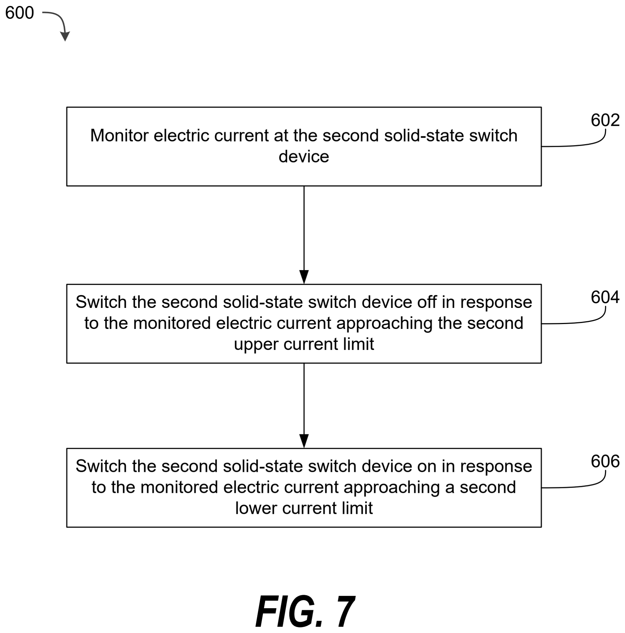

FIG. 7 is a flow diagram of a method 600 for transferring power sources, according to some embodiments. The method 600 can be an embodiment of the method 300 of FIG. 4. The method 600 can be an embodiment of 408 of the method 400 of FIG. 5. The method 600 can be an embodiment of block 504 of the method 500 of FIG. 6. The method 600 can be implemented by the system 100 of FIGS. 1 and 2. The method 600 can be implemented by the system 200 of FIG. 3.

At 602, the method 600 can include monitoring, with the controller, electric current at the second solid-state switch device. For example, the system can include current sensors at the static transfer switch for measuring electric current at the solid-state switch devices to ensure the current does not exceed the variable current limit. The first and second power sources can be AC power sources, which applies an AC waveform current to the static transfer switch and the corresponding solid-state switch devices, the AC waveform current having positive and negative peak current values.

At 604, the method 600 can include switching, with the controller, the second solid-state switch device off in response to the monitored electric current approaching the second upper current limit. The controller can drive the second solid-state switch device to switch off (i.e., open position) by sending a corresponding gate signal to the second solid-state switch device responsive to the peak current at the second solid-state switch device approaching (or exceeding) the second upper current limit.

At 606, the method 600 can include switching, with the controller, the second solid-state switch device on in response to the monitored electric current approaching a second lower current limit. The controller can drive the second solid-state switch device to switch on (i.e., closed position) by sending a corresponding gate signal to the second solid-state switch device responsive to the peak current at the second solid-state switch device approaching (or exceeding) the second lower current limit.

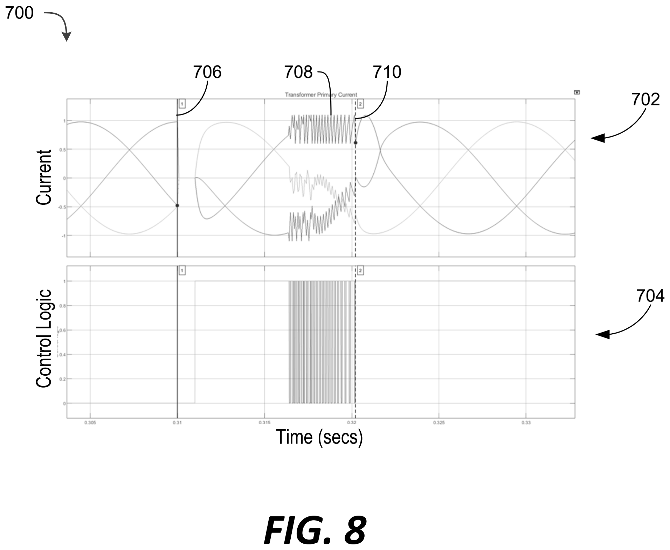

FIG. 8 is a graphical illustration of a current-time chart 700 during a transfer operation in an example system, according to some embodiments. The example system can be an embodiment of system 100 of FIGS. 1 and 2, although other systems are possible. The chart 700 can be implemented with any combination of components and/or subsystems of system 100 of FIGS. 1 and 2, although other systems are possible. The chart 700 can in some embodiments be implemented by a control circuit 202 of FIG. 3, although others are possible.

Chart 700 can be representative of, for example, a transfer process of connecting a load to an alternate power source from a preferred power source. The electric current from the power sources can be monitored at a primary side of load transformer 110 (FIG. 1 or FIG. 2) as shown at graph 702. The control logic from the controller that can be applied to the static transfer switch to selectively switch the solid-state switch device on and off during the transferring of power sources is shown at graph 704. The point at which the load transformer 110 (FIG. 1 or FIG. 2) is disconnected, for example, from the first power source 102 (FIG. 1 or FIG. 2) is shown at time 706 at graph 702. The current applied to load transformer 110 (FIG. 1 or FIG. 2) after time 706, at approximately 1 msec after time 706, can be from the alternate power source to which the load 108 (FIG. 1 or FIG. 2) is being transferred.

Graph 702 illustrates the selectively switching of the solid-state switch device when transferring power sources at phase 708, in which load current is maintained within a current limit range. The boundaries of the current limit range can be defined based on the phase angle difference α between the power sources being in the first range or the second range. In this regard, the control circuit can implement a first current limit range when in the first range, and a second current limit range when in the second range, the current limit range being greater for the range that is closer to 0°. The point at which the solid-state switch device is switched on and the selectively switching of the solid-state switch device for transferring the load transformer 110 (FIG. 1 or FIG. 2) to the corresponding power source is complete is shown at time 710. Time 710 can, in some embodiments, be based on the load transformer 110 (FIG. 1 or FIG. 2) flux matching the alternate source voltage.

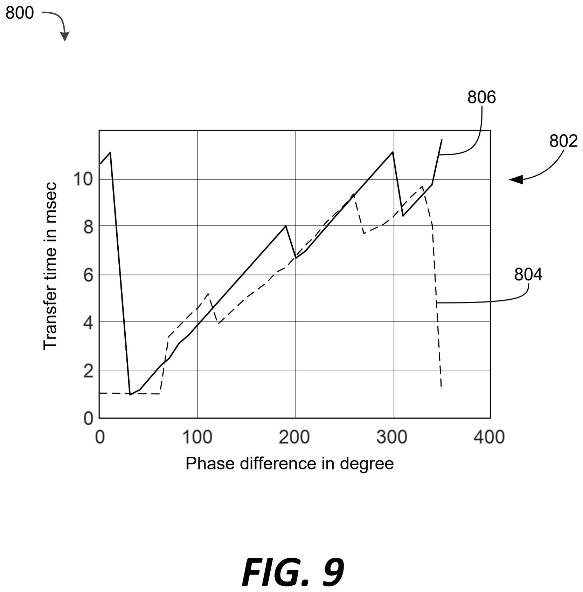

FIG. 9 is a graphical illustration of a transfer time-phase difference chart 800 in a system, according to some embodiments. The system can be an embodiment of system 100 of FIGS. 1 and 2, although other systems are possible. The chart 800 can be implemented with any combination of components and/or subsystems of system 100 of FIGS. 1 and 2.

In chart 800, the transfer times of an example current limiting algorithm described herein is shown at line 804. The transfer times of another algorithm is shown at line 806. For example, the line 806 can correspond to a DIR algorithm. According to the phase angle difference α between the power sources, the controller can implement a higher current limit (i.e., optimal inrush current limit Iopt) that reduces a transfer time between the power sources. In one example, when the phase angle difference α is 300°, the current limiting algorithm can implement a corresponding higher current limit to reduce the transfer time to approximately 8.2 msec compared to the transfer time of approximately 10.5 msec of the other algorithm. In another example, when the phase angle difference α is 330° ≤ α ≤ 30, the current limiting algorithm can implement a respective higher current limit in accordance with the specific value phase angle difference α to reduce the transfer time compared to the other algorithm. Although the present disclosure is described with regards to the phase angle difference α being in the range of 330° ≤ α ≤ 30, it is to be appreciated that the current limiting algorithm of the present disclosure can apply the higher current limit (i.e., optimal inrush current limit Iopt) at one or more ranges in between 0° and 360° that results in reducing the transfer time compared to the other algorithm.

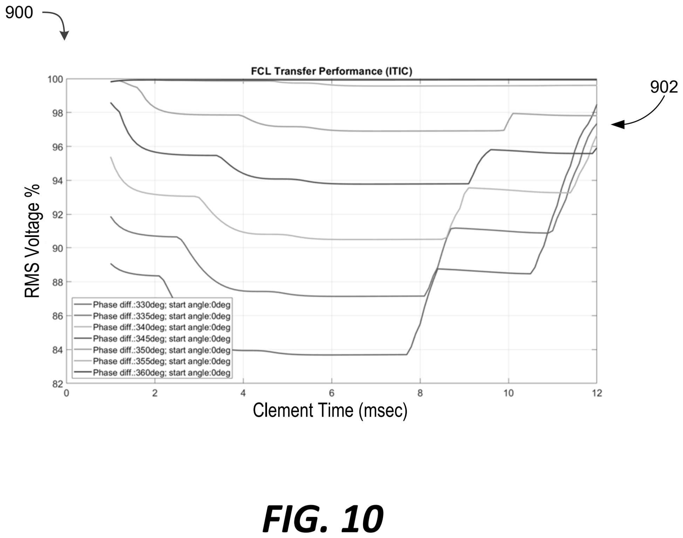

FIG. 10 is a graphical illustration of a first clement time-RMS voltage chart 900 in a system, according to some embodiments. The system can be an embodiment of system 100 of FIGS. 1 and 2, although other systems are possible. Chart 900 can be implemented with one or more components and/or subsystems of system 100 of FIGS. 1 or 2.

The transfer performance of the static transfer switch 106 (FIG. 1 or FIG. 2) at 5° intervals for phase angle differences α between 330° and 360° for a second current limit (i.e., optimal inrush current limit Iopt) having a value 1.15 times the nominal inrush current limit is shown at graph 902. At graph 902, it can be observed, for example, that the root mean square (RMS) voltage does not drop below 90% for phase angle differences α ≥ 340°. Based on the data of graph 902 including the RMS voltages, the control circuit 120 (FIG. 1 or FIG. 2) can in some embodiments determine the transfer performance of the static transfer switch 106 (FIG. 1 or FIG. 2) at a smaller interval for a portion of the phase angle differences α between 330° and 360° to determine the second current limit that can be implemented at the static transfer switch 106 (FIG. 1 or FIG. 2) to reduce the transfer times.

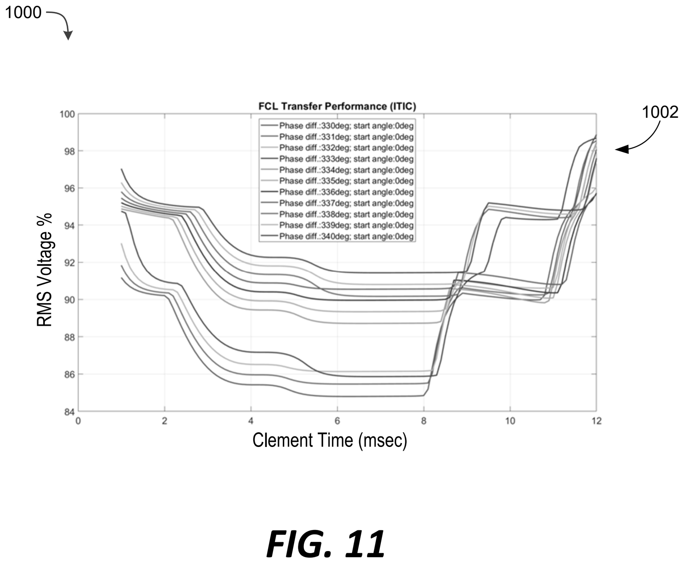

FIG. 11 is a graphical illustration of a second clement time-RMS voltage chart 1000 in the system of FIG. 10, according to some embodiments. The system can be an embodiment of system 100 of FIGS. 1 and 2, although other systems are possible. Chart 1000 can be implemented with one or more components and/or subsystems of system 100 of FIGS. 1 or 2.

Based on chart 1000, the control circuit 120 can in some embodiments simulate the transfer performance for phase differences 330° ≤ α ≤ 340° at different current limits (i.e., optimal inrush current limits Iopt) to obtain a finer resolution of the transfer performance. Graph 1002 illustrates the transfer performance of the static transfer switch 106 at 1° intervals for phase angle differences α between 330° and 340° at 1.82 times the nominal inrush current as a non-limiting example. At graph 1002, it can be observed that the root mean square (RMS) voltage does not drop below 90% for phase angle differences α ≥ 336°. The control circuit 120 (FIG. 1 or FIG. 2) can in some embodiments determine the transfer performance of the static transfer switch 106 (FIG. 1 or FIG. 2) at the smaller interval for the phase angle differences α between 330° and 340° to determine whether the current limit can be further refined to reduce the transfer times at the static transfer switch 106 (FIG. 1 or FIG. 2).

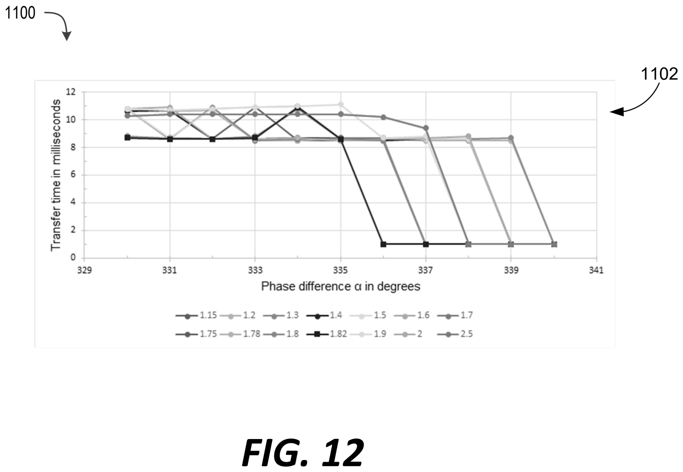

FIG. 12 is a graphical illustration of a first transfer time-phase difference chart 1100 in a system of FIG. 10, according to some embodiments. The system can be an embodiment of system 100 of FIGS. 1 and 2, although other systems are possible. Chart 1100 can be implemented with any combination of components and/or subsystems of system 100 of FIGS. 1 and 2.

Based on the graph 1102, for example, the control circuit 120 (FIG. 1 or FIG. 2) can simulate the transfer times of the static transfer switch 106 (FIG. 1 or FIG. 2) at 1° intervals for phase angle differences α between 330° and 340° and for different second current limits (i.e., optimal inrush current limit Iopt) between 1.15 and 2.5 times the nominal inrush current as shown at graph 1102. It can be observed at graph 1102, for example, that the second current limit can be further refined when the phase angle difference is between 330° and 340° to reduce the transfer times.

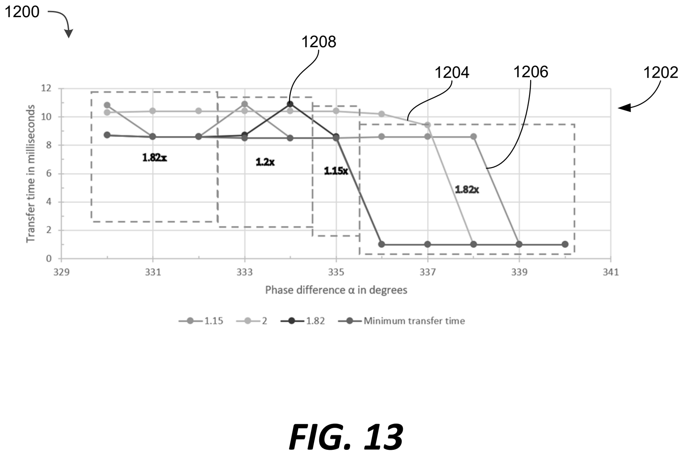

FIG. 13 is a graphical illustration of a second transfer time-phase difference chart 1200 in the system of FIG. 10, according to some embodiments. The system can be an embodiment of system 100 of FIGS. 1 and 2, although other systems are possible. Chart 1200 can be implemented with any combination of components and/or subsystems of system 100 of FIGS. 1 and 2.

The minimum transfer time trajectory that can be achieved for variable inrush current limits is shown at graph 1202. The different inrush current limits implemented by the control circuit 120 (FIG. 1 or FIG. 2) during the transfer of power sources using the static transfer switch 106 (FIG. 1 or FIG. 2) can include, for example, 1.82 times the nominal inrush current limit when the phase angle difference is between 330° and 332.4°, 1.2 times the nominal inrush when the phase angle difference is between 332.5° and 334.4°, 1.15 times the nominal inrush when the phase angle difference is between 334.5° and 335.5°, and 1.82 times the nominal inrush when the phase angle difference is between 335.6° and 340°. It is to be appreciated that simply raising the second current limit (i.e., optimal inrush current limit Iopt) to the maximum allowed inrush current limit Imax is not sufficient to achieve the reduction in transfer times, which is evidenced by line 1204 of graph 1202 of FIG. 13, where the transfer times for a current limit that is 2 times the nominal inrush current is shown, and which demonstrates higher transfer times (>10 msec) relative the current limit that is 1.15 times the nominal inrush current shown at line 1206 and the current limit that is 1.82 times the nominal inrush current shown at line 1208. It is also to be appreciated that the transfer performance of the example system shown in chart 1200 and shown at graphs 1202 including lines 1204, 1206, and 1208 are exemplary performance characteristics and not intended to be limiting, and that the transfer characteristics of the example system can vary based on operational parameters of the system.

All prior patents and publications referenced herein are incorporated by reference in their entireties.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiment(s), though it may. Furthermore, the phrases "in another embodiment" and "in some other embodiments" as used herein do not necessarily refer to a different embodiment, although it may. All embodiments of the disclosure are intended to be combinable without departing from the scope or spirit of the disclosure.

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "between" does not necessarily require being disposed directly next to other elements. Generally, this term means a configuration where something is sandwiched by two or more other things. At the same time, the term "between" can describe something that is directly next to two opposing things. Accordingly, in any one or more of the embodiments disclosed herein, a particular structural component being disposed between two other structural elements can be: disposed directly between both of the two other structural elements such that the particular structural component is in direct contact with both of the two other structural elements; disposed directly next to only one of the two other structural elements such that the particular structural component is in direct contact with only one of the two other structural elements; disposed indirectly next to only one of the two other structural elements such that the particular structural component is not in direct contact with only one of the two other structural elements, and there is another element which juxtaposes the particular structural component and the one of the two other structural elements; disposed indirectly between both of the two other structural elements such that the particular structural component is not in direct contact with both of the two other structural elements, and other features can be disposed therebetween; or any combination(s) thereof.

As used herein "embedded" means that a first material is distributed throughout a second material.

### ASPECTS

Various Aspects are described below. It is to be understood that any one or more of the features recited in the following Aspect(s) can be combined with any one or more other Aspect(s).

Aspect 1. A method comprising: monitoring, with a controller associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch; in response to detecting a power quality event affecting the first power source, switching, with the controller, the first solid-state switch device off to disconnect the load from the first power source; calculating, with the controller, a value characterizing a phase angle difference between the first power source and the second power source based on the monitored voltage waveforms; and selectively switching, with the controller, the second solid-state switch device on and off to connect the load to the second power source in accordance with the calculated value being in one of a first range and a second range; wherein the controller selectively switches the second solid-state switch device on and off in accordance with a first current limit based on the calculated value being in the first range and a second current limit based on the calculated value being in the second range to reduce a transfer time for transferring the load from the first power source to the second power source.

Aspect 2. The method according to aspect 1, wherein the first current limit comprises a first upper current limit being a value characterizing a nominal inrush current limit of the second solid-state switch device; wherein the second current limit comprises at least one second upper current limit being at least one value characterizing at least one inrush current limit between the nominal inrush current limit and a maximum allowed inrush current of the second solid-state switch device based on the calculated value characterizing the phase angle difference between the first power source and the second power source.

Aspect 3. The method according to aspect 2, wherein the maximum allowed inrush current of the second solid-state switch device is based on a thermal limit of the second solid-state switch device.

Aspect 4. The method according to aspects 2 or 3, wherein, in response to the calculated value being in the second range, the method further comprising: determining, with the controller, a second upper current limit of the at least one second upper current limit predicted to result in a lowest transfer time for transferring the load from the first power source to the second power source with the second solid-state switch device based on the calculated value; and selectively switching, with the controller, the second solid-state switch device on and off to transfer the load from the first power source to the second power source in accordance with the second upper current limit; wherein the second upper current limit being a respective value of the at least one value characterizing an inrush current limit of the at least one inrush current limit between the nominal inrush current limit and the maximum allowed inrush current of the second solid-state switch device.

Aspect 5. The method according to aspect 4, wherein determining the second upper current limit of the at least one second upper current limit predicted to result in the lowest transfer time for transferring the load from the first power source to the second power source with the second solid-state switch device comprises: identifying, with the controller, the lowest transfer time of the second solid-state switch device from a dataset, the dataset comprising a plurality of values characterizing the phase angle difference between the first power source and the second power source and a plurality of transfer times, wherein each value of the plurality of values corresponding to a transfer time of the plurality of transfer times for transferring the load from the first power source to the second power source using the second solid-state switch device.

Aspect 6. The method according to aspects 4 or 5, wherein determining the second upper current limit of the at least one second upper current limit predicted to result in the lowest transfer time for transferring the load from the first power source to the second power source with the second solid-state switch device comprises: predicting, with the controller, the lowest transfer time of the second solid-state switch device based on calculated value characterizing the phase angle difference between the first power source and the second power source.

Aspect 7. The method according to aspects 4, 5, or 6, wherein selectively switching the second solid-state switch device on and off to transfer the load from the first power source to the second power source in accordance with the second upper current limit further comprising: monitoring, with the controller, electric current at the second solid-state switch device; switching, with the controller, the second solid-state switch device off in response to the monitored electric current approaching the second upper current limit; and switching, with the controller, the second solid-state switch device on in response to the monitored electric current approaching a second lower current limit.

Aspect 8. The method according to any of the preceding aspects, wherein the phase angle difference in the second range comprising the first power source lagging or leading the second power source by 30° ± 10°.

Aspect 9. The method according to any of the preceding aspects, wherein the phase angle difference in the first range comprising the first power source lagging or leading the second power source outside the second range.

Aspect 10. The method according to any of the preceding aspects, further comprising: detecting an end to the power quality event affecting the first power source; switching, with the controller, the second solid-state switch device off to disconnect the load from the second power source; calculating, with the controller, a second value characterizing a phase angle difference between the first power source and the second power source based on the monitored voltage waveforms; and selectively switching, with the controller, the first solid-state switch device on and off to connect the load to the first power source from the second power source in accordance with the calculated value being in one of the first range and the second range; wherein the controller selectively switches the first solid-state switch device on and off in accordance with a first current limit of the first solid-state switch device based on the calculated value being in the first range and a second current limit of the first solid-state switch device based on the calculated value being in the second range to reduce a transfer time for transferring the load from the second power source to the first power source.

Aspect 11. A system comprising: a static transfer switch, each phase of the static transfer switch comprising: a first solid-state switch device selectively operable to connect a load to a first power source; and a second solid-state switch device selectively operable to connect the load to a second power source; and a controller associated with the static transfer switch, the controller configured to perform operations comprising: monitor a first voltage waveform of the first power source and a second voltage waveform of the second power source; in response to detecting a power quality event affecting the first power source, switch the first solid-state switch device off to disconnect the load from the first power source; calculate a value characterizing a phase angle difference between the first power source and the second power source based on the monitored voltage waveforms; and selectively switch the second solid-state switch device on and off to connect the load to the second power source in accordance with the calculated value being in one of a first range and a second range; wherein the controller selectively switches the second solid-state switch device on and off in accordance with a first current limit based on the calculated value being in the first range and a second current limit based on the calculated value being in the second range to reduce a transfer time for transferring the load from the first power source to the second power source.

Aspect 12. The system according to aspect 11, wherein the first current limit comprises a first upper current limit being a value characterizing a nominal inrush current limit of the second solid-state switch device; wherein the second current limit comprises at least one second upper current limit being at least one value characterizing at least one inrush current limit between the nominal inrush current limit and a maximum allowed inrush current of the second solid-state switch device based on the calculated value characterizing the phase angle difference between the first power source and the second power source; wherein the maximum allowed inrush current of the second solid-state switch device is based on a thermal limit of the second solid-state switch device.

Aspect 13. The system according to aspect 12, wherein, in response to the calculated value being in the second range, the operations further comprising: determine a second upper current limit of the at least one second upper current limit predicted to result in a lowest transfer time for transferring the load from the first power source to the second power source with the second solid-state switch device based on the calculated value; and selectively switch the second solid-state switch device on and off to transfer the load from the first power source to the second power source in accordance with the second upper current limit; wherein the second upper current limit being a respective value of the at least one value characterizing an inrush current limit of the at least one inrush current limit between the nominal inrush current limit and the maximum allowed inrush current of the second solid-state switch device.

Aspect 14. The system according to aspects 12 or 13, wherein determining the second upper current limit of the at least one second upper current limit predicted to result in the lowest transfer time for transferring the load from the first power source to the second power source with the second solid-state switch device comprises: identify the lowest transfer time of the second solid-state switch device from a dataset, the dataset comprising a plurality of values characterizing the phase angle difference between the first power source and the second power source and a plurality of transfer times, wherein each value of the plurality of values corresponding to a transfer time of the plurality of transfer times for transferring the load from the first power source to the second power source using the second solid-state switch device.

Aspect 15. The system according to any of the preceding aspects, wherein, in the first range, the first power source lags or leads the second power source by 30° ± 10°; wherein the phase angle difference in the first range comprising the first power source lagging or leading the second power source outside the second range.

Aspect 16. A control circuit associated with a static transfer switch for transferring electrical connection of a load between a first power source and a second power source of an AC distribution system using at least one algorithm, the control circuit configured to perform operations comprising: monitor a first voltage waveform of the first power source and a second voltage waveform of the second power source; in response to detecting a power quality event affecting the first power source, switch a first solid-state switch device off to disconnect the load from the first power source; calculate a value characterizing a phase angle difference between the first power source and the second power source based on the monitored voltage waveforms; and selectively switch the second solid-state switch device on and off to connect the load to the second power source in accordance with the calculated value being in one of a first range and a second range; wherein the controller selectively switches the second solid-state switch device on and off in accordance with a first current limit based on the calculated value being in the first range and a second current limit based on the calculated value being in the second range to reduce a transfer time for transferring the load from the first power source to the second power source.

Aspect 17. The control circuit according to aspect 16, wherein the first current limit comprises a first upper current limit being a value characterizing a nominal inrush current limit of the second solid-state switch device; wherein the at least one second current limit comprises at least one second upper current limit being at least one value characterizing at least one inrush current limit between the nominal inrush current limit and a maximum allowed inrush current of the second solid-state switch device based on the calculated value characterizing the phase angle difference between the first power source and the second power source; wherein the maximum allowed inrush current of the second solid-state switch device is based on a thermal limit of the second solid-state switch device.

Aspect 18. The control circuit according to aspects 16 or 17, wherein, in response to the calculated value being in the second range, the operations further comprising: determine a second upper current limit of the at least one second upper current limit predicted to result in a lowest transfer time for transferring the load from the first power source to the second power source with the second solid-state switch device based on the calculated value; and selectively switch the second solid-state switch device on and off to transfer the load from the first power source to the second power source in accordance with the second upper current limit; wherein the second upper current limit being a respective value of the at least one value characterizing an inrush current limit of the at least one inrush current limit between the nominal inrush current limit and a maximum allowed inrush current of the second solid-state switch device.

Aspect 19. The control circuit according to aspect 18, wherein determining the second upper current limit of the at least one second upper current limit predicted to result in the lowest transfer time for transferring the load from the first power source to the second power source with the second solid-state switch device comprises: identify the lowest transfer time of the second solid-state switch device from a dataset, the dataset comprising a plurality of values characterizing the phase angle difference between the first power source and the second power source and a plurality of transfer times, wherein each value of the plurality of values corresponding to a transfer time of the plurality of transfer times for transferring the load from the first power source to the second power source using the second solid-state switch device.

Aspect 20. The control circuit according to aspects 16, 17, 18, or 19, wherein, in the first range, the first power source lags or leads the second power source by 30° ± 10°; wherein the phase angle difference in the first range comprising the first power source lagging or leading the second power source outside the second range.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A method comprising:
monitoring, with a controller associated with a static transfer switch of an AC distribution system, a first voltage waveform of a first power source connectable to a load by a first solid-state switch device of the static transfer switch and a second voltage waveform of a second power source connectable to the load by a second solid-state switch device of the static transfer switch;
in response to detecting a power quality event affecting the first power source, switching, with the controller, the first solid-state switch device off to disconnect the load from the first power source;
calculating, with the controller, a value characterizing a phase angle difference between the first power source and the second power source based on the monitored voltage waveforms; and
selectively switching, with the controller, the second solid-state switch device on and off to connect the load to the second power source in accordance with the calculated value being in one of a first range and a second range;
wherein the controller selectively switches the second solid-state switch device on and off in accordance with a first current limit based on the calculated value being in the first range and a second current limit based on the calculated value being in the second range to reduce a transfer time for transferring the load from the first power source to the second power source.

2. The method of claim 1, wherein the first current limit comprises a first upper current limit being a value characterizing a nominal inrush current limit of the second solid-state switch device;
wherein the second current limit comprises at least one second upper current limit being at least one value characterizing at least one inrush current limit between the nominal inrush current limit and a maximum allowed inrush current of the second solid-state switch device based on the calculated value characterizing the phase angle difference between the first power source and the second power source.

3. The method of claim 2, wherein the maximum allowed inrush current of the second solid-state switch device is based on a thermal limit of the second solid-state switch device.

4. The method of claim 2 or 3, wherein, in response to the calculated value being in the second range, the method further comprising:
determining, with the controller, a second upper current limit of the at least one second upper current limit predicted to result in a lowest transfer time for transferring the load from the first power source to the second power source with the second solid-state switch device based on the calculated value; and
selectively switching, with the controller, the second solid-state switch device on and off to transfer the load from the first power source to the second power source in accordance with the second upper current limit;
wherein the second upper current limit being a respective value of the at least one value characterizing an inrush current limit of the at least one inrush current limit between the nominal inrush current limit and the maximum allowed inrush current of the second solid-state switch device.

5. The method of claim 4, wherein determining the second upper current limit of the at least one second upper current limit predicted to result in the lowest transfer time for transferring the load from the first power source to the second power source with the second solid-state switch device comprises:
identifying, with the controller, the lowest transfer time of the second solid-state switch device from a dataset, the dataset comprising a plurality of values characterizing the phase angle difference between the first power source and the second power source and a plurality of transfer times,
wherein each value of the plurality of values corresponding to a transfer time of the plurality of transfer times for transferring the load from the first power source to the second power source using the second solid-state switch device.

6. The method of claim 4 or 5, wherein determining the second upper current limit of the at least one second upper current limit predicted to result in the lowest transfer time for transferring the load from the first power source to the second power source with the second solid-state switch device comprises:
predicting, with the controller, the lowest transfer time of the second solid-state switch device based on calculated value characterizing the phase angle difference between the first power source and the second power source.

7. The method of one of claims 4 to 6, wherein selectively switching the second solid-state switch device on and off to transfer the load from the first power source to the second power source in accordance with the second upper current limit further comprising:
monitoring, with the controller, electric current at the second solid-state switch device;
switching, with the controller, the second solid-state switch device off in response to the monitored electric current approaching the second upper current limit; and
switching, with the controller, the second solid-state switch device on in response to the monitored electric current approaching a second lower current limit.

8. The method of one of the preceding claims, wherein the phase angle difference in the second range comprising the first power source lagging or leading the second power source by 30° ± 10°.

9. The method of claim 8, wherein the phase angle difference in the first range comprising the first power source lagging or leading the second power source outside the second range.

10. The method of one of the preceding claims, further comprising:
detecting an end to the power quality event affecting the first power source;
switching, with the controller, the second solid-state switch device off to disconnect the load from the second power source;
calculating, with the controller, a second value characterizing a phase angle difference between the first power source and the second power source based on the monitored voltage waveforms; and
selectively switching, with the controller, the first solid-state switch device on and off to connect the load to the first power source from the second power source in accordance with the calculated value being in one of the first range and the second range;
wherein the controller selectively switches the first solid-state switch device on and off in accordance with a first current limit of the first solid-state switch device based on the calculated value being in the first range and a second current limit of the first solid-state switch device based on the calculated value being in the second range to reduce a transfer time for transferring the load from the second power source to the first power source.

11. A system comprising:
a static transfer switch, each phase of the static transfer switch comprising:
a first solid-state switch device selectively operable to connect a load to a first power source; and
a second solid-state switch device selectively operable to connect the load to a second power source; and
a controller associated with the static transfer switch, the controller configured to perform operations comprising:
monitor a first voltage waveform of the first power source and a second voltage waveform of the second power source;
in response to detecting a power quality event affecting the first power source, switch the first solid-state switch device off to disconnect the load from the first power source;
calculate a value characterizing a phase angle difference between the first power source and the second power source based on the monitored voltage waveforms; and
selectively switch the second solid-state switch device on and off to connect the load to the second power source in accordance with the calculated value being in one of a first range and a second range;
wherein the controller selectively switches the second solid-state switch device on and off in accordance with a first current limit based on the calculated value being in the first range and a second current limit based on the calculated value being in the second range to reduce a transfer time for transferring the load from the first power source to the second power source.

12. The system of claim 11, wherein the first current limit comprises a first upper current limit being a value characterizing a nominal inrush current limit of the second solid-state switch device;
wherein the second current limit comprises at least one second upper current limit being at least one value characterizing at least one inrush current limit between the nominal inrush current limit and a maximum allowed inrush current of the second solid-state switch device based on the calculated value characterizing the phase angle difference between the first power source and the second power source;
wherein the maximum allowed inrush current of the second solid-state switch device is based on a thermal limit of the second solid-state switch device.

13. The system of claim 12, wherein, in response to the calculated value being in the second range, the operations further comprising:
determine a second upper current limit of the at least one second upper current limit predicted to result in a lowest transfer time for transferring the load from the first power source to the second power source with the second solid-state switch device based on the calculated value; and
selectively switch the second solid-state switch device on and off to transfer the load from the first power source to the second power source in accordance with the second upper current limit;
wherein the second upper current limit being a respective value of the at least one value characterizing an inrush current limit of the at least one inrush current limit between the nominal inrush current limit and the maximum allowed inrush current of the second solid-state switch device.

14. The system of claim 13, wherein determining the second upper current limit of the at least one second upper current limit predicted to result in the lowest transfer time for transferring the load from the first power source to the second power source with the second solid-state switch device comprises:
identify the lowest transfer time of the second solid-state switch device from a dataset, the dataset comprising a plurality of values characterizing the phase angle difference between the first power source and the second power source and a plurality of transfer times,
wherein each value of the plurality of values corresponding to a transfer time of the plurality of transfer times for transferring the load from the first power source to the second power source using the second solid-state switch device.

15. The system of claim 13 or 14, wherein, in the first range, the first power source lags or leads the second power source by 30° ± 10°;
wherein the phase angle difference in the first range comprising the first power source lagging or leading the second power source outside the second range.

16. A control circuit associated with a static transfer switch for transferring electrical connection of a load between a first power source and a second power source of an AC distribution system using at least one algorithm, the control circuit configured to perform operations comprising:
monitor a first voltage waveform of the first power source and a second voltage waveform of the second power source;
in response to detecting a power quality event affecting the first power source, switch a first solid-state switch device off to disconnect the load from the first power source;
calculate a value characterizing a phase angle difference between the first power source and the second power source based on the monitored voltage waveforms; and
selectively switch the second solid-state switch device on and off to connect the load to the second power source in accordance with the calculated value being in one of a first range and a second range;
wherein the controller selectively switches the second solid-state switch device on and off in accordance with a first current limit based on the calculated value being in the first range and a second current limit based on the calculated value being in the second range to reduce a transfer time for transferring the load from the first power source to the second power source.

17. The control circuit of claim 16, wherein the first current limit comprises a first upper current limit being a value characterizing a nominal inrush current limit of the second solid-state switch device;
wherein the at least one second current limit comprises at least one second upper current limit being at least one value characterizing at least one inrush current limit between the nominal inrush current limit and a maximum allowed inrush current of the second solid-state switch device based on the calculated value characterizing the phase angle difference between the first power source and the second power source;
wherein the maximum allowed inrush current of the second solid-state switch device is based on a thermal limit of the second solid-state switch device.

18. The control circuit of claim 17, wherein, in response to the calculated value being in the second range, the operations further comprising:
determine a second upper current limit of the at least one second upper current limit predicted to result in a lowest transfer time for transferring the load from the first power source to the second power source with the second solid-state switch device based on the calculated value; and
selectively switch the second solid-state switch device on and off to transfer the load from the first power source to the second power source in accordance with the second upper current limit;
wherein the second upper current limit being a respective value of the at least one value characterizing an inrush current limit of the at least one inrush current limit between the nominal inrush current limit and a maximum allowed inrush current of the second solid-state switch device.

19. The control circuit of claim 18, wherein determining the second upper current limit of the at least one second upper current limit predicted to result in the lowest transfer time for transferring the load from the first power source to the second power source with the second solid-state switch device comprises:
identify the lowest transfer time of the second solid-state switch device from a dataset, the dataset comprising a plurality of values characterizing the phase angle difference between the first power source and the second power source and a plurality of transfer times,
wherein each value of the plurality of values corresponding to a transfer time of the plurality of transfer times for transferring the load from the first power source to the second power source using the second solid-state switch device.

20. The control circuit of claim 18 or 19, wherein, in the first range, the first power source lags or leads the second power source by 30° ± 10°;
wherein the phase angle difference in the first range comprising the first power source lagging or leading the second power source outside the second range.
